# EUROPÄISCHE PATENTSCHRIFT

(11) **EP 1 849 290 B1**
(45) Veröffentlichungstag und Bekanntmachung des Hinweises auf die Patenterteilung: **29.08.2012**
(21) Anmeldenummer: 06706915.3
(22) Anmeldetag: 14.02.2006
(51) Int. Cl.: H04M 1/725, G06F 3/023, H04M 1/247

(54) **BETREIBEN VON IN TELEKOMMUNIKATIONSNETZEN NUTZBAREN ENDGERÄTEN UND ENDGERÄT ZUR NUTZUNG IN TELEKOMMUNIKATIONSNETZEN**
OPERATION OF TERMINAL DEVICES THAT CAN BE OPERATED IN TELECOMMUNICATION NETWORKS AND TERMINAL DEVICE FOR USE IN TELECOMMUNICATION NETWORKS
PROCEDE PERMETTANT DE FAIRE FONCTIONNER DES TERMINAUX UTILISABLES DANS DES RESEAUX DE TELECOMMUNICATION ET TERMINAL DESTINE A ETRE UTILISE DANS DES RESEAUX DE TELECOMMUNICATION

(30) Priorität: 14.02.2005 DE 102005006788
(43) Veröffentlichungstag der Anmeldung: 31.10.2007
(73) Patentinhaber: Vodafone Holding GmbH, 40213 Düsseldorf (DE)
(72) Erfinder: LISS, Peter, S-11523 Stockholm (SE); ADRIAN, Burholt, Bromham, Wiltshire SN15 2DW (GB); DE VOS, Geert, B-1730 Asse (BE); TOLLEMACHE, Luke, Oxford, OX41YB (GB); PULLIN, Graham, Ecir 5DF, London (GB); PORTZ, Michael, 41812 Erkelenz (DE)
(74) Vertreter: Weisbrodt, Bernd
(86) Internationale Anmeldenummer: PCT/EP2006/001308
(87) Internationale Veröffentlichungsnummer: WO 2006/084763

(56) Entgegenhaltungen:
- EP-A- 1 387 241
- GB-A- 2 344 492
- US-A1- 2003 157 970
- US-A1- 2004 198 475

## Beschreibung

Die vorliegende Erfindung betrifft ein Verfahren zum Betreiben von in Telekommunikationsnetzen, insbesondere Mobilfunknetzen, nutzbaren Endgeräten, die jeweils eine Anzeigeinrichtung zur optischen Wiedergabe von Informationen und wenigstens eine Eingabeeinrichtung zur Erfassung von Informationen aufweisen, wobei seitens der Anzeigeeinrichtung Kommunikationsinformationen und in Zusammenhang mit den Kommunikationsinformationen zur Verfügung stehende Bedienmöglichkeiten für eine weitergehende Nutzung der Kommunikationsinformationen wiedergegeben werden und wobei die Eingabeeinrichtung wenigstens eine Taste aufweist, die bei Betätigung wenigstens eine weitergehende Nutzung der Kommunikationsinformationen ermöglicht. Ferner betrifft die vorliegende Erfindung ein Endgerät zur Nutzung in Telekommunikationsnetzen, insbesondere Mobilfunknetzen, mit einer Anzeigeinrichtung zur optischen Wiedergabe von Informationen und wenigstens einer Eingabeeinrichtung zur Erfassung von Informationen, wobei seitens der Anzeigeeinrichtung Kommunikationsinformationen und in Zusammenhang mit den Kommunikationsinformationen zur Verfügung stehende Bedienmöglichkeiten für eine weitergehende Nutzung der Kommunikationsinformationen wiedergebbar sind und die Eingabeeinrichtung wenigstens eine durch Betätigung wenigstens eine weitergehende Nutzung der Kommunikationsinformationen ermöglichende Taste aufweist.

Im Stand der Technik sind derartige Verfahren und Endgeräte in zahlreichen Ausgestaltungen von sogenannten in bzw. an einem Fernmeldenetz betreibbaren Festnetztelefonen oder von in Mobilfunknetzen betreibbaren Mobilfunktelefonen her bekannt. Neben einer herkömmlichen Kommunikation durch Telefonieren ermöglichen derartige Verfahren und Endgeräte die Nutzung weiterer von Telekommunikationsnetzen, insbesondere Mobilfunknetzen, bereitgestellter Dienste, die weitere Kommunikationsinformationen, wie beispielsweise verpasste Anrufe hinsichtlich der Rufnummer, eingegangene Nachrichten wie Kurzmitteilungen eines Kurzmitteilungsdienstes (SMS (Short Messages Service)), sogenannte Voicemails eines Sprachdienstes oder dergleichen Nachrichten verwenden. Derartige Kommunikationsinformationen werden dabei seitens der in der Regel als Display ausgebildeten Anzeigeeinrichtung eines Endgerätes wiedergegeben und sind durch eine nachfolgende Betätigung einer Taste der in der Regel als Tastatur ausgebildeten Eingabeeinrichtung im Detail seitens der Anzeigeeinrichtung wiedergebbar und/oder einer weiteren bzw. anderen Nutzung zuführbar, beispielsweise beantwortbar, löschbar, speicherbar oder sonst wie nutzbar.

Ein solches Endgerät ist von US 2003/0157970 bekannt.

Die Nutzung derartiger Dienste seitens der Endgeräte bedingt eine entsprechende Bedienbarkeit und Handhabbarkeit seitens der Endgeräte, wozu diese eine entsprechende Nutzung ermöglichende Anwendungen aufweisen. Die Anwendungen weisen dabei mitunter äußerst umfangreiche und insbesondere für ältere und/oder ungeübte Nutzer nicht bzw. nur schwer verständliche Bedienmöglichkeiten bereitstellende Menüführungen auf. Dabei werden entsprechende Bedienmöglichkeiten der weitergehenden Nutzung mitunter zwar seitens der Anzeigeeinrichtung wiedergegeben, bisher allerdings in einer für ältere und/oder ungeübte Nutzer nicht bzw. nur schwer verständlichen Art und Weise.

In der Regel führt eine derart aufwändige, umständliche und insbesondere aufgrund von hinsichtlich der Anzahl und der Größe beschränkten Tasten einer Eingabeeinrichtung schwierigen Bedienung und/oder Handhabung dazu, dass Nutzer der Endgeräte von einer entsprechenden weitergehenden Nutzung entsprechender Kommunikationsinformationen seitens der Endgeräte und damit von einer Nutzung von mit dem Endgerät nutzbaren Diensten des Telekommunikationsnetzes absehen.

Vor diesem Hintergrund liegt der vorliegenden Erfindung die Aufgabe zugrunde, ein zum Verfahren zum Betreiben von in Telekommunikationsnetzen, insbesondere Mobilfunknetzen, nutzbaren Endgeräten der eingangs genannten Art als auch ein Endgerät zur Nutzung in Telekommunikationsnetzen, insbesondere Mobilfunknetzen, der eingangs genannten Art derart zu verbessern, dass unter Meidung der beschriebenen Nachteile insbesondere für ältere und/oder ungeübte Nutzer eine einfachere und weniger umständliche Bedien- bzw. Handhabbarkeit hinsichtlich einer weitergehenden Nutzung der Kommunikationsinformationen ermöglicht wird.

Zur technischen Lösung dieser Aufgabe wird mit der vorliegenden Erfindung ein Verfahren zum Betreiben von in Telekommunikationsnetzen, insbesondere Mobilfunknetzen, nutzbaren Endgeräten, die jeweils eine Anzeigeinrichtung zur optischen Wiedergabe von Informationen und wenigstens eine Eingabeeinrichtung zur Erfassung von Informationen aufweisen, wobei seitens der Anzeigeeinrichtung Kommunikationsinformationen und in Zusammenhang mit den Kommunikationsinformationen zur Verfügung stehende Bedienmöglichkeiten für eine weitergehende Nutzung der Kommunikationsinformationen wiedergegeben werden und wobei die Eingabeeinrichtung wenigstens eine Taste aufweist, die bei Betätigung wenigstens eine weitergehende Nutzung der Kommunikationsinformationen ermöglicht, bereitgestellt, bei dem die Bedienmöglichkeiten zur weitergehenden Nutzung der Kommunikationsinformationen gewichtet vorgegeben werden.

Der Erfindung liegt die Erkenntnis zugrunde, dass eine insbesondere für ältere und/oder ungeübte Nutzer einfachere und weniger umständliche Bedien- bzw. Handhabbarkeit hinsichtlich einer weitergehenden Nutzung der Kommunikationsinformationen durch eine gewichtet erfolgende Vorgabe der Bedienmöglichkeiten zur weitergehenden Nutzung der Kommunikationsinformationen ermöglicht wird. Erfindungsgemäß ist der Wiedergabe der Bedienmöglichkeiten zur weitergehenden Nutzung der Kommunikationsinformationen quasi eine Art Filterlogik überlagert, welche die Bedienmöglichkeiten zur weitergehenden Nutzung der Kommunikationsinformationen einer Gewichtung unterzieht und entsprechend gewichtet vorgibt.

Vorteilhafterweise wird die Gewichtung der Bedienmöglichkeiten zur weitergehenden Nutzung der Kommunikationsinformationen eingestellt, vorzugsweise nutzerindividuell. Durch diese erfindungsgemäß gegebene, vorzugsweise nutzerindividuelle Einstellbarkeit der Gewichtung ist die Bedien- bzw. Handhabbarkeit hinsichtlich einer weitergehenden Nutzung der Kommunikationsinformationen weiter verbesserbar und an die Bedürfnisse des jeweiligen Nutzers eines Endgerätes anpassbar.

Gemäß einem weiteren Vorschlag der Erfindung werden die Bedienmöglichkeiten zur weitergehenden Nutzung der Kommunikationsinformationen durch eine der Gewichtung entsprechende Wiedergabe der Bedienmöglichkeiten zur weitergehenden Nutzung der Kommunikationsinformationen seitens der Anzeigeeinrichtung vorgegeben. Dadurch ist erfindungsgemäß eine entsprechend der Gewichtung selektiv erfolgende Wiedergabe der Bedienmöglichkeiten zur weitergehenden Nutzung der Kommunikationsinformationen seitens der Anzeigeeinrichtung gegeben. Andere Bedienmöglichkeiten des Endgerätes sind so seitens des Endgerätes nach wie vor möglich, werden erfindungsgemäß jedoch nur nicht bzw. nur nicht direkt seitens der Anzeigeeinrichtung des Endgerätes wiedergegeben.

In einer weiteren Ausgestaltung der Erfindung wird im Rahmen der gewichteten Vorgabe der Bedienmöglichkeiten zur weitergehenden Nutzung der Kommunikationsinformationen dieser Nutzung die wenigstens eine die entsprechende weitergehende Nutzung der Kommunikationsinformationen durch Betätigung ermöglichende Taste der Eingabeeinrichtung zugeordnet. Durch die erfindungsgemäße Tastenzuordnung im Rahmen der gewichteten Vorgabe der Bedienmöglichkeiten zur weitergehenden Nutzung der Kommunikationsinformationen lässt sich die Bedien- bzw. Handhabbarkeit weiter verbessern und für den Nutzer eines Endgerätes insbesondere hinsichtlich individueller Bedürfnisse weiter anpassen. Vorteilhafterweise wird die Zuordnung der die entsprechende weitergehende Nutzung der Kommunikationsinformationen durch Betätigung ermöglichenden Taste der Eingabeeinrichtung seitens der Anzeigeeinrichtung wiedergegeben. Durch die Wiedergabe der Tastenzuordnung seitens der Anzeigeeinrichtung des Endgerätes ist die Bedien- bzw. Handhabbarkeit des Endgerätes für den Nutzer weiter vereinfacht, da die für Bedienung zur weitergehenden Nutzung zu betätigende Taste dem Nutzer angezeigt wird.

Gemäß einem weiteren vorteilhaften Vorschlag der Erfindung werden die Bedienmöglichmöglichkeiten zur weitergehenden Nutzung der Kommunikationsinformationen seitens der Anzeigeeinrichtung in einer mit der wenigstens einen eine entsprechende weitergehende Nutzung der Kommunikationsinformationen durch Betätigung ermöglichenden Taste der Eingabeeinrichtung korrespondierenden Form wiedergegeben. Dabei werden die Bedienmöglichkeiten zur weitergehenden Nutzung der Kommunikationsinformationen vorteilhafterweise seitens der Anzeigeeinrichtung in einer mit der wenigstens einen eine entsprechende weitergehende Nutzung der Kommunikationsinformationen durch Betätigung ermöglichenden Taste der Eingabeeinrichtung hinsichtlich der Farbe, der Form und/oder der Position der Taste seitens des Endgerätes und/oder der Eingabeeinrichtung des Endgerätes korrespondierenden Form wiedergegeben. Durch diese erfindungsgemäßen Maßnahmen ist die Bedien- bzw. Handhabbarkeit des Endgerätes weiter vereinfachbar.

Eine besonders vorteilhafte Ausgestaltung der Erfindung sieht vor, dass zur Anzeige der Zuordnung der wenigstens einen eine entsprechende weitergehende Nutzung der Kommunikationsinformationen durch Betätigung ermöglichenden Taste der Eingabeeinrichtung die Farbe der wenigstens einen eine entsprechende weitergehende Nutzung der Kommunikationsinformationen durch Betätigung ermöglichenden Taste der Eingabeeinrichtung verändert wird. Die Veränderung der Farbe der Taste der Eingabeeinrichtung signalisiert dem Nutzer dabei vorteilhafterweise sowohl die Bedienmöglichkeit zur weitergehenden Nutzung der Kommunikationsinformationen, als auch die zu betätigende Taste für eine entsprechende weitergehende Nutzung der Kommunikationsinformationen, wodurch die Bedien- bzw. Handhabbarkeit des Endgerätes weiter vereinfachbar ist.

In vorteilhaften Ausgestaltung der Erfindung werden eingehende und/oder abgehende Anrufe, eingehende und/oder abgehende Mitteilungen eines Nachrichtendienstes eines Telekommunikationsnetzes und/oder Informationen über Kommunikationspartner des Nutzers des jeweiligen Endgerätes als Kommunikationsinformationen seitens der Anzeigeeinrichtung wiedergegeben werden.

In einer besonders vorteilhaften Ausgestaltung der Erfindung wird aus den Kommunikationsinformationen wenigstens eine Information bestimmt und für die Gewichtung der Bedienmöglichkeiten zur weitergehenden Nutzung der Kommunikationsinformationen genutzt. Dadurch sind die Kommunikationsinformationen erfindungsgemäß quasi hinsichtlich ihres Inhaltes automatisch interpretierbar und der entsprechend interpretierte Inhalt als Information für die Gewichtung der Bedienmöglichkeiten zur weitergehenden Nutzung der Kommunikationsinformationen nutzbar. Vorteilhafterweise wird als Information aus den Kommunikationsinformationen die Anzahl eingehender und/oder abgehender Anrufe und/oder Mitteilungen eines Nachrichtendienstes eines Telekommunikationsnetzes bestimmt. In einer besonders bevorzugten Ausgestaltung der Erfindung wird als Information bestimmt, ob in einer Mitteilung eines Nachrichtendienstes eines Telekommunikationsnetzes als Kommunikationsinformationen wenigstens eine bestimmte Zeichenfolge, vorzugsweise eine Rufnummer und/oder Schlüsselworte enthalten ist. Dies erlaubt eine weitergehende Interpretation von Kommunikationsinformationen bzw. von deren Inhalten oder zumindest Teilen von diesen. Die Zeichenfolge wird vorteilhafterweise eingestellt, vorzugsweise nutzerindividuell, so dass eine weitere Steigerung der Nutzerindividualität hinsichtlich der Gewichtung vornehmbar ist. Die Gewichtung ist so vorteilhafterweise hinsichtlich thematischer und/oder zeitlicher, den Nutzer interessierender Kategorien konfigurierbar und entsprechend durchführbar.

In einer weiteren vorteilhaften Ausgestaltung der Erfindung ist das erfindungsgemäße Verfahren als Anwendungsprogramm auf ein Endgerät übertragbar und seitens des Endgerätes ausführbar.

Zur technischen Lösung der eingangs genannten Aufgabe wird mit der vorliegenden Erfindung ferner ein Endgerät zur Nutzung in Telekommunikationsnetzen, insbesondere Mobilfunknetzen, mit einer Anzeigeinrichtung zur optischen Wiedergabe von Informationen und wenigstens einer Eingabeeinrichtung zur Erfassung von Informationen, wobei seitens der Anzeigeeinrichtung Kommunikationsinformationen und in Zusammenhang mit den Kommunikationsinformationen zur Verfügung stehende Bedienmöglichkeiten für eine weitergehende Nutzung der Kommunikationsinformationen wiedergebbar sind und die Eingabeeinrichtung wenigstens eine durch Betätigung wenigstens eine weitergehende Nutzung der Kommunikationsinformationen ermöglichende Taste aufweist, bereitgestellt, bei dem die Bedienmöglichkeiten zur weitergehenden Nutzung der Kommunikationsinformationen gewichtet vorgebbar sind.

Vorteilhafterweise ist die Gewichtung einstellbar, vorzugsweise nutzerindividuell. Dadurch ist die Bedien- bzw. Handhabbarkeit hinsichtlich einer weitergehenden Nutzung der Kommunikationsinformationen weiter verbesserbar und an die Bedürfnisse des jeweiligen Nutzers eines Endgerätes anpassbar.

Die Vorgabe der Bedienmöglichkeiten zur weitergehenden Nutzung der Kommunikationsinformationen erfolgt vorteilhafterweise durch eine der Gewichtung entsprechenden Wiedergabe der Bedienmöglichkeiten zur weitergehenden Nutzung der Kommunikationsinformationen seitens der Anzeigeeinrichtung.

In einer weiteren Ausgestaltung der Erfindung erfolgt im Rahmen der gewichteten Vorgabe der Bedienmöglichkeiten zur weitergehenden Nutzung der Kommunikationsinformationen eine Zuordnung der eine entsprechende weitergehende Nutzung der Kommunikationsinformationen durch Tastenbetätigung ermöglichenden Taste der Eingabeeinrichtung. Die Zuordnung der eine entsprechende weitergehende Nutzung der Kommunikationsinformationen durch Tastenbetätigung ermöglichenden Taste der Eingabeeinrichtung ist vorteilhafterweise seitens der Anzeigeeinrichtung wiedergebbar.

In einer weiteren vorteilhaften Ausgestaltung der Erfindung erfolgt die Wiedergabe der Bedienmöglichmöglichkeiten zur weitergehenden Nutzung der Kommunikationsinformationen seitens der Anzeigeeinrichtung in einer mit der wenigstens einen eine entsprechende weitergehende Nutzung der Kommunikationsinformationen durch Betätigung ermöglichenden Taste der Eingabeeinrichtung korrespondierenden Form. Vorteilhafterweise korrespondiert die Wiedergabe der Bedienmöglichkeiten zur weitergehenden Nutzung der Kommunikationsinformationen seitens der Anzeigeeinrichtung mit der wenigstens einen eine entsprechende weitergehende Nutzung der Kommunikationsinformationen durch Betätigung ermöglichenden Taste der Eingabeeinrichtung hinsichtlich der Farbe, der Form und/oder der Position der Taste seitens des Endgerätes und/oder der Eingabeeinrichtung des Endgerätes.

Eine weitere Ausgestaltung der Erfindung sieht vor, dass die Farbe der wenigstens einen Taste der Eingabeeinrichtung veränderbar ist. Die Veränderung der Farbe der Taste der Eingabeeinrichtung ist vorteilhafterweise zur Signalisierung sowohl der Bedienmöglichkeit zur weitergehenden Nutzung der Kommunikationsinformationen, als auch der zu betätigenden Taste für eine entsprechende weitergehende Nutzung der Kommunikationsinformationen, nutzbar.

In einer konkreten Ausgestaltung der Erfindung ist die wenigstens eine eine weitergehende Nutzung der Kommunikationsinformationen durch Betätigung ermöglichende Taste der Eingabeeinrichtung von einer zumindest teilweise berührungssensitiven Anzeigeeinrichtung, ein sogenanntes Touchscreen, ausgebildet. Vorteilhafterweise ist die berührungssensitive Anzeigeeinrichtung (Touchscreen) zumindest teilweise Bestandteil der Anzeigeeinrichtung zur optischen Wiedergabe von Informationen.

In einer besonders bevorzugten Ausgestaltung der Erfindung ist die wenigstens eine eine weitergehende Nutzung der Kommunikationsinformationen durch Betätigung ermöglichende Taste der Eingabeeinrichtung von weiteren zur Erfassung von Informationen durch Betätigung nutzbaren Tasten der Eingabeeinrichtung derart beabstandet angeordnet, dass sich zwischen der wenigstens einen eine weitergehende Nutzung der Kommunikationsinformationen durch Betätigung ermöglichenden Taste der Eingabeeinrichtung und weiteren zur Erfassung von Informationen durch Betätigung nutzbaren Tasten der Eingabeeinrichtung die Anzeigeeinrichtung zur optischen Wiedergabe von Informationen befindet. Bei einer weiteren vorteilhaften Ausgestaltung der Erfindung befindet sich die wenigstens eine eine weitergehende Nutzung der Kommunikationsinformationen durch Betätigung ermöglichende Taste der Eingabeeinrichtung in einem Bereich oberhalb der Anzeigeeinrichtung zur optischen Wiedergabe von Informationen und die weiteren zur Erfassung von Informationen durch Betätigung nutzbaren Tasten der Eingabeeinrichtung in einem Bereich unterhalb der Anzeigeeinrichtung zur optischen Wiedergabe von Informationen.

Zur weiteren Verbesserung der Bedien- bzw. Handhabbarkeit des Endgerätes ist die wenigstens eine eine weitergehende Nutzung der Kommunikationsinformationen durch Betätigung ermöglichende Taste der Eingabeeinrichtung vorteilhafterweise hinsichtlich ihrer Abmessungen größer ausgebildet, als die einzelnen weiteren zur Erfassung von Informationen durch Betätigung nutzbaren Tasten der Eingabeeinrichtung. In einer konkreten Ausgestaltung der Erfindung ist die wenigstens eine eine weitergehende Nutzung der Kommunikationsinformationen durch Betätigung ermöglichende Taste der Eingabeeinrichtung hinsichtlich ihrer Abmessungen viermal so groß ausgebildet, wie die einzelnen weiteren zur Erfassung von Informationen durch Betätigung nutzbaren Tasten der Eingabeeinrichtung. In einer besonders bevorzugten Ausgestaltung der Erfindung weist die Eingabeeinrichtung drei durch Betätigung eine weitergehende Nutzung der Kommunikationsinformationen ermöglichende Tasten auf, welche vorzugsweise nebeneinander angeordnet sind.

Eine weitere Ausgestaltung eines erfindungsgemäßen Endgerätes ist gekennzeichnet durch eingehende und/oder abgehende Anrufe, durch eingehende und/oder abgehende Mitteilungen eines Nachrichtendienstes eines Telekommunikationsnetzes und/oder durch Informationen über Kommunikationspartner des Nutzers des Endgerätes als Kommunikationsinformationen.

In einer besonders vorteilhaften Ausgestaltung der Erfindung ist aus den Kommunikationsinformationen wenigstens eine für die Gewichtung der Bedienmöglichkeiten zur weitergehenden Nutzung der Kommunikationsinformationen nutzbare Information bestimmbar. Vorteilhafterweise ist als Information aus den Kommunikationsinformationen die Anzahl eingehender und/oder abgehender Anrufe und/oder Mitteilungen eines Nachrichtendienstes eines Telekommunikationsnetzes bestimmbar. Die Anzahl ist dabei beispielsweise an einer bestimmten Stelle in dem Textkörper einer entsprechenden Kommunikationsinformation, beispielsweise einer SMS oder dergleichen Mitteilung, enthalten und aus dieser direkt auslesbar. In einer besonders vorteilhaften Ausgestaltung der Erfindung ist als Information bestimmbar, ob in einer Mitteilung eines Nachrichtendienstes eines Telekommunikationsnetzes als Kommunikationsinformationen wenigstens eine bestimmte Zeichenfolge, vorzugsweise eine Rufnummer und/oder Schlüsselworte, enthalten ist. Die Zeichenfolge ist vorteilhafterweise einstellbar, vorzugsweise nutzerindividuell.

In einer bevorzugten Ausgestaltung ist das Endgerät ein in Mobilfunknetzen betreibbares mobiles Endgerät, vorzugsweise ein Mobilfunktelefon.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: in einer Draufsicht ein Ausführungsbeispiel eines erfindungsgemäßen Endgerätes zur Ausführung eines erfindungsgemäßen Verfahrens in einem ersten Funktionszustand;
- Fig. 2: in einer Draufsicht das erfindungsgemäße Endgerät zur Ausführung eines erfindungsgemäßen Verfahrens gemäß Fig. 1 mit einer erfolgenden Tasteneingabe und
- Fig. 3: in einer Draufsicht das erfindungsgemäße Endgerät zur Ausführung eines erfindungsgemäßen Verfahrens gemäß Fig. 1 in einem zweiten Funktionszustand nach erfolgter Tasteneingabe gemäß Fig. 2.

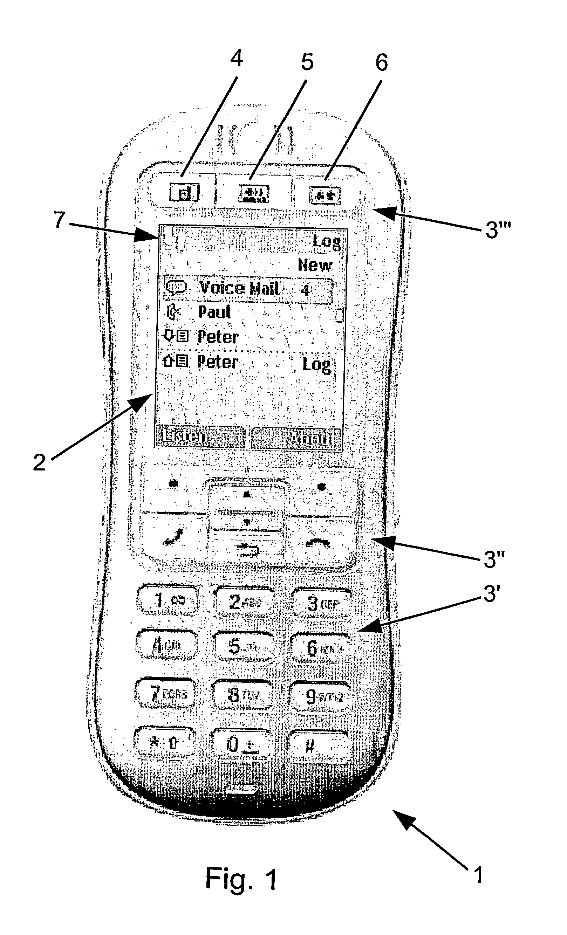

Die Figuren 1 bis 3 zeigen jeweils ein in einem Mobilfunknetz betreibbares mobiles Endgerät in Form eines Mobilfunktelefons 1. Das Mobilfunktelefon 1 weist ein Display 2 als Anzeigeeinrichtung zur optischen Wiedergabe von Informationen und eine vorliegend aus drei Tastaturen 3', 3" und 3'" bestehende Eingabeeinrichtung zur Erfassung von Informationen und/oder Bedieneingaben auf. Das Mobilfunktelefon 1 weist weiter einen hier nicht explizit dargestellten Lautsprecher zur Wiedergabe von akustischen Informationen und ein hier ebenfalls nicht explizit dargestelltes Mikrofon zur Erfassung akustischer Informationen auf.

Die drei Tastaturen 3', 3" und 3"' der Eingabeeinrichtung weisen jeweils mehrere betätigbare Tasten auf. Die zwölf Tasten der Tastatur 3' der Eingabeeinrichtung dienen der Erfassung von Informationen durch Eingabe von einzelnen Zeichen, beispielsweise Ziffer oder Buchstaben. Die sechs Tasten der Tastatur 3" der Eingabeeinrichtung dienen zur Steuerung von und/oder durch Funktionalitäten des Endgerätes 1, beispielsweise zur Gesprächsannahme, Gesprächsbeendigung, Menüauswahl und dergleichen. Die mittlere Taste der Tastatur 3" der Eingabeeinrichtung ist dabei als zwischen zwei Positionen kippbare Taste ausgebildet und erlaubt in entsprechenden Anwendungen ein Blättern bzw. sogenannten Scrollen, insbesondere für eine weitergehende Auswahl. Die drei nebeneinander angeordneten Tasten 4, 5 und 6 der Tastatur 3"' der Eingabeeinrichtung dienen vorliegend einer weitergehende Nutzung von seitens der Anzeigeeinrichtung 2 wiedergegebenen Kommunikationsinformationen. Eine entsprechende Nutzung wird dabei durch Betätigung einer der entsprechenden Tasten 4, 5 oder 6 der Tastatur 3'" der Eingabeeinrichtung ausgelöst. Die Tastatur 3"' der Eingabeeinrichtung ist vorliegend in einem Bereich oberhalb und die beiden Tastaturen 3' und 3" in einem Bereich unterhalb der Anzeigeeinrichtung 2 angeordnet, wobei die Tastatur 3" vorliegend unmittelbar an die Anzeigeeinrichtung 2 angrenzt. Die drei Tasten 4, 5 und 6 der Tastatur 3'" der Eingabeeinrichtung sind vorliegend größer als die Tasten der Tastaturen 3' und 3" der Eingabeeinrichtung ausgebildet. Ferner können die Tasten 4, 5 und 6 der Tastatur 3'" der Eingabeeinrichtung ihre Farbe ändern, wozu die Tasten 4, 5 und 6 der Tastatur 3"' der Eingabeeinrichtung vorliegend jeweils eine mehrfarbige Hintergrundbeleuchtung aufweisen.

Um eine insbesondere für ältere und/oder ungeübte Nutzer einfachere und weniger umständliche Bedien- bzw. Handhabbarkeit hinsichtlich einer weitergehenden Nutzung der Kommunikationsinformationen zu ermöglichen werden die Bedienmöglichkeiten zur weitergehenden Nutzung der Kommunikationsinformationen seitens des Endgerätes 1 gewichtet vorgegeben. Im Rahmen der gewichteten Vorgabe der Bedienmöglichkeiten zur weitergehenden Nutzung der Kommunikationsinformationen werden den möglichen Nutzungen und/oder Bedienmöglichkeiten derselben die entsprechenden Tasten 4, 5, 6 der Eingabeeinrichtung 3'" zugeordnet. In Abhängigkeit von der Gewichtung wird dann in den jeweiligen Funktionszuständen seitens der Anzeigeeinrichtung 2 die Zuordnung der die entsprechende weitergehende Nutzung der Kommunikationsinformationen durch Betätigung ermöglichenden Taste 4, 5, und/oder 6 der Eingabeeinrichtung 3"' wiedergegeben. In Fig. 1 ist dies anhand des auf der Taste 6 der Tastatur 3'" der Eingabeeinrichtung verwendeten Doppelpfeilsymbols und der korrespondierend als Taste mit Doppelpfeilsymbol seitens der Anzeigeeinrichtung 2 erfolgenden Darstellung in der linken oberen Ecke der Anzeigeeinrichtung 2 und dem mit dem Bezugszeichen 7 versehenen Pfeil erkennbar. Sowohl die Taste 6 der Tastatur 3"' der Eingabeeinrichtung als auch die mit dem Bezugszeichen 7 versehenen Pfeil erfolgende Anzeige derselben seitens der Anzeigeeinrichtung 2 erfolgen dabei in einer einander entsprechenden oder miteinander korrespondierenden Farbe. Der Nutzer des Endgerätes weiß so beispielsweise durch einfache Symbol- und/oder Farbzuordnung aufgrund der verfahrensgemäß erfolgenden Gewichtung der Bedienmöglichkeiten zur weitergehenden Nutzung der Kommunikationsinformationen seitens des Endgerätes 1, welche Taste er als Bedienmöglichkeit zur weitergehenden Nutzung der Kommunikationsinformationen zu betätigen hat.

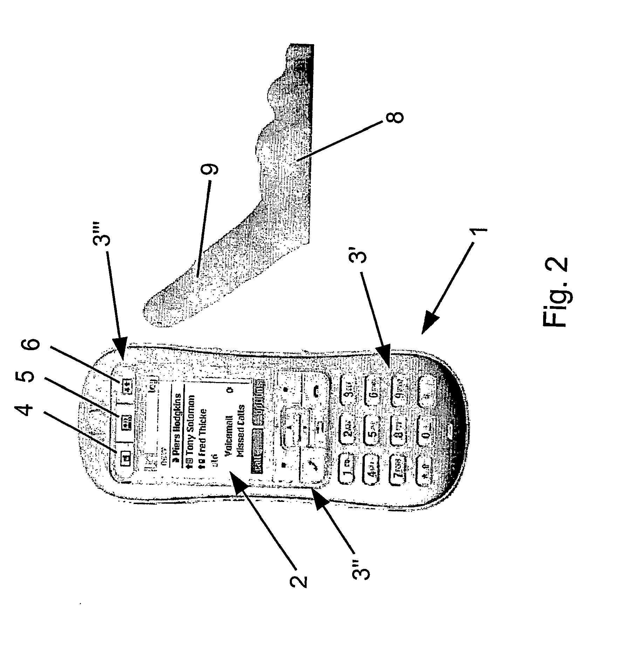

Fig. 2 zeigt symbolisch eine entsprechende Funktionszustandsänderung des Endgerätes durch Betätigungseingabe der Taste 6 der Tastatur 3'" der Eingabeeinrichtung mittels des Zeigefingers 9 der Hand 8 eines hier nicht weiter dargestellten Nutzers des Endgerätes 1.

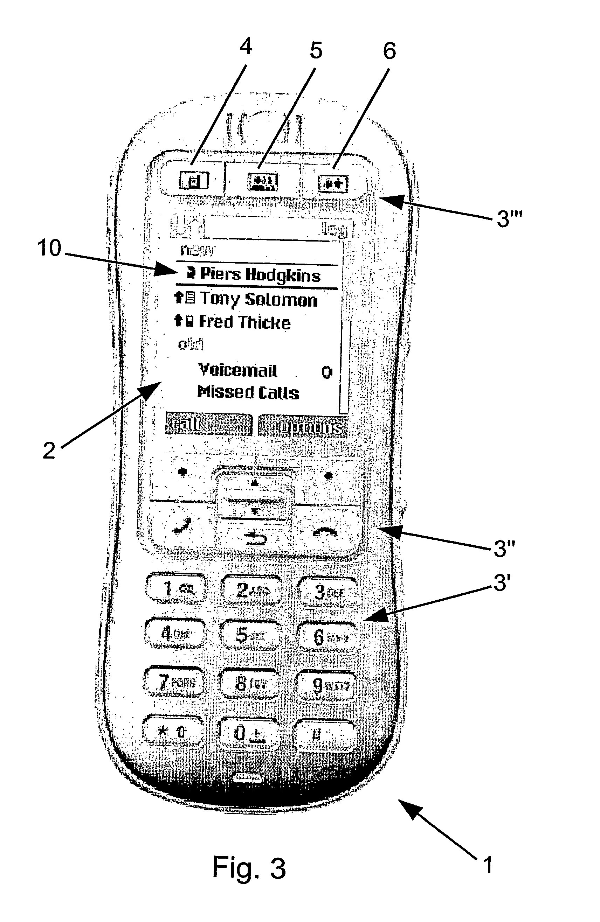

Fig. 3 zeigt den nach erfolgter Betätigung der Taste 6 der Tastatur 3'" der Eingabeeinrichtung gemäß Fig. 2 von dem mobilen Endgerät ausgehend von dem ersten Funktionszustand gemäß Fig. 1 eingenommenen zweiten Funktionszustand des Endgerätes 1. Im ersten in Fig. 1 dargestellten Funktionszustand des mobilen Endgerätes 1 wird seitens der Anzeigeeinrichtung 2 entsprechend der gewichteten Vorgabe zunächst als Kommunikationsinformation höherer Priorität wiedergegeben, dass auf dem Endgerät 1 bzw. für den Nutzer des Endgerätes 1 vier sogenannte "Voice Mails" vorhanden sind. Dem Nutzer wird - wie oben bereits erläutert - durch die in Fig. 1 mit dem Pfeil 7 versehene Darstellung der Taste 6 der Tastatur 3'" der Eingabeeinrichtung die Bedienung- und/oder Handhabung des Endgerätes vereinfachend angezeigt, das zur entsprechend weitergehenden Nutzung dieser Kommunikationsinformationen die Taste 6 der Tastatur 3'" der Eingabeeinrichtung zu betätigen ist. In dem in Fig. 3 dargestellten Funktionszustand des Endgerätes werden die Kommunikationsinformationen nach Betätigung der Taste 6 der Tastatur 3"' der Eingabeeinrichtung gemäß Fig. 2 der entsprechenden weitergehenden Nutzung zugeführt. Dabei werden vorliegend seitens der Anzeigeeinrichtung 2 in dem mit dem Bezugszeichen 10 versehenen Pfeil gekennzeichneten Bereich die weitergehenden Kommunikationsinformationen der sogenannten "Voice Mails" hinsichtlich der Kommunikationspartner und hinsichtlich der Aktualität der Kommunikationsinformationen wiedergegeben. Die Wiedergabe erfolgt entsprechend einer mittels der Gewichtung ermittelten Dringlichkeit der Kommunikationsparameter, wobei vorliegend die Kommunikationsinformationen und/oder -parameter des "Piers Hodgkins" für den Nutzer des Endgerätes 1 höchste Priorität haben und entsprechend wiedergegeben werden.

Seitens des Endgerätes 1 ist vorteilhafterweise ein Zähler realisiert bzw. vorhanden, welcher die Anzahl eingehender und/oder abgehender Anrufe und/oder Mitteilungen eines Nachrichtendienstes eines Telekommunikationsnetzes bestimmt. Bei dem in Fig. 1 dargestellten Ausführungsbeispiel sind dementsprechend von dem Zähler des mobilen Endgerätes 1 - wie bereits erläutert - vier sogenannte "Voice Mails" indiziert. Die von dem Zähler bestimmte Anzahl eingehender und/oder abgehender Anrufe und/oder Mitteilungen eines Nachrichtendienstes eines Telekommunikationsnetzes wird vorteilhafterweise entsprechend seitens der Anzeigeeinrichtung 2 wiedergegeben. Bei dem in Fig. 1 dargestellten Ausführungsbeispiel ist die Anzahl der dementsprechend von dem Zähler des mobilen Endgerätes 1 indizierten "Voice Mails" unmittelbar hinter deren Wiedergabe in einer Zeile angeordnet wiedergegeben, wie anhand der Ziffer "4" hinter dem Eintag "Voice Mails" in Fig.1 zu erkennen ist. Der Zähler des mobilen Endgerätes ist vorteilhafterweise derart ausgebildet, dass dieser die indizierte und wiedergegebene Anzahl eingehender und/oder abgehender Anrufe und/oder Mitteilungen eines Nachrichtendienstes eines Telekommunikationsnetzes mit und/oder nach deren Nutzung, beispielsweise durch Lesen oder Abhören durch den Nutzer entsprechend einer weitergehenden Nutzung derselben nach den Figuren 2 und 3, dekrementiert und die entsprechend dekrementierte Anzahl eingehender und/oder abgehender Anrufe und/oder Mitteilungen eines Nachrichtendienstes eines Telekommunikationsnetzes seitens der Anzeigeeinrichtung 2 wiedergibt.

Die in den Figuren der Zeichnung dargestellten Ausführungsbeispiele der Erfindung dienen lediglich der Erläuterung der Erfindung und sind für diese nicht beschränkend.

### Bezugszeichenliste

- 1: Endgerät/Mobilfunktelefon
- 2: Anzeigeeinrichtung/Display
- 3', 3", 3'": Eingabeeinrichtung/Tastatur
- 4: Taste (Eingabeeinrichtung (3"'))
- 5: Taste (Eingabeeinrichtung (3"'))
- 6: Taste (Eingabeeinrichtung (3"'))
- 7: Anzeige (Taste (6))
- 8: Hand
- 9: Finger/Zeigefinger
- 10: Wiedergabe Mitteilung (Voicemail)

## Patentansprüche

1. Verfahren zum Betreiben von in Mobilfunknetzen, nutzbaren Endgeräten (1), die jeweils eine Anzeigeeinrichtung (2) zur optischen Wiedergabe von Informationen und wenigstens eine Eingabeeinrichtung (3', 3", 3"') zur Erfassung von Informationen aufweisen, wobei seitens der Anzeigeeinrichtung (2) Kommunikationsinformationen und in Zusammenhang mit den Kommunikationsinformationen zur Verfügung stehende Bedienmöglichkeiten für eine durch Betätigung der Eingabeeinrichtung (3''') erfolgende weitergehende Nutzung der Kommunikationsinformationen wiedergegeben werden, die zur weitergehenden Nutzung der Kommunikationsinformationen zur Verfügung stehenden Bedienmöglichkeiten gewichtet werden, und die Eingabeeinrichtung (3"') wenigstens eine Taste (4, 5, 6) aufweist, die welche bei Betätigung die wenigstens eine weitergehende Nutzung der Kommunikationsinformationen ermöglicht, **dadurch gekennzeichnet,**
**dass** die zur weitergehenden Nutzung der Kommunikationsinformationen zur Verfügung stehenden Bedienmöglichkeiten entsprechend der Gewichtung der wenigstens einen die entsprechende weitergehende Nutzung der Kommunikationsinformationen durch Betätigung ermöglichenden Taste (4, 5, 6) der Eingabeeinrichtung (3"') zugeordnet und seitens der Anzeigeeinrichtung (2) wiedergegeben werden, wobei die Wiedergabe in einer mit der wenigstens einen Taste (4, 5, 6) der Eingabeeinrichtung (3"') korrespondierenden Form erfolgt.

2. Verfahren nach Anspruch 6 1, **dadurch gekennzeichnet, dass** die Bedienmöglichkeiten zur weitergehenden Nutzung der Kommunikationsinformationen seitens der Anzeigeeinrichtung (2) in einer mit der wenigstens einen eine entsprechende weitergehende Nutzung der Kommunikationsinformationen durch Betätigung ermöglichenden Taste (4, 5, 6) der Eingabeeinrichtung (3"') hinsichtlich der Farbe, der Form und/oder der Position der Taste (4, 5, 6) seitens des Endgerätes (1) und/oder der Eingabeeinrichtung (3"') des Endgerätes (1) korrespondierenden Form wiedergegeben werden.

3. Verfahren Anspruch 1 oder Anspruch 2, **dadurch gekennzeichnet, dass** zur Anzeige der Zuordnung der wenigstens einen eine entsprechende weitergehende Nutzung der Kommunikationsinformationen durch Betätigung ermöglichenden Taste (4, 5, 6) der Eingabeeinrichtung (3"') die Farbe der wenigstens einen eine entsprechende weitergehende Nutzung der Kommunikationsinformationen durch Betätigung ermöglichenden Taste (4, 5, 6) der Eingabeeinrichtung (3"') verändert wird.

4. Verfahren nach einem der Ansprüche 1 bis 3, **dadurch gekennzeichnet, dass** die Gewichtung der Bedienmöglichkeiten zur weitergehenden Nutzung der Kommunikationsinformationen nutzerindividuell eingestellt wird.

5. Verfahren nach einem der Ansprüche 1 bis 4, **dadurch gekennzeichnet, dass** eingehende und/oder abgehende Anrufe als Kommunikationsinformationen seitens der Anzeigeeinrichtung (2) wiedergegeben werden.

6. Verfahren nach einem der Ansprüche 1 bis 4, **dadurch gekennzeichnet, dass** eingehende und/oder abgehende Mitteilungen eines Nachrichtendienstes eines Telekommunikationsnetzes als Kommunikationsinformationen seitens der Anzeigeeinrichtung (2) wiedergegeben werden.

7. Verfahren nach einem der Ansprüche 1 bis 6, **dadurch gekennzeichnet, dass** Informationen über Kommunikationspartner des Nutzers des jeweiligen Endgerätes (1) als Kommunikationsinformationen seitens der Anzeigeeinrichtung (2) wiedergegeben werden.

8. Verfahren nach einem der Ansprüche 1 bis 44 7, **dadurch gekennzeichnet, dass** aus den Kommunikationsinformationen wenigstens eine Information bestimmt und für die Gewichtung der Bedienmöglichkeiten zur weitergehenden Nutzung der Kommunikationsinformationen genutzt wird.

9. Verfahren nach Anspruch 8, **dadurch gekennzeichnet, dass** als Information aus den Kommunikationsinformationen die Anzahl eingehender und/oder abgehender Anrufe und/oder Mitteilungen eines Nachrichtendienstes eines Telekommunikationsnetzes bestimmt wird.

10. Verfahren nach Anspruch 8 oder Anspruch 9, **dadurch gekennzeichnet, dass** als Information bestimmt wird, ob in einer Mitteilung eines Nachrichtendienstes eines Telekommunikationsnetzes als Kommunikationsinformationen wenigstens eine bestimmte Zeichenfolge enthalten ist.

11. Verfahren nach Anspruch 10, **dadurch gekennzeichnet, dass** die Zeichenfolge nutzerindividuell eingestellt wird.

12. Verfahren nach Anspruch 10 oder Anspruch 11, **dadurch gekennzeichnet, dass** als Zeichenfolge Rufnummern und/oder Schlüsselworte genutzt werden.

13. Verfahren nach einem der Ansprüche 1 bis 12, **dadurch gekennzeichnet, dass** dieses als Anwendungsprogramm auf ein Endgerät übertragbar und seitens des Endgerätes ausführbar ist.

14. Endgerät (1) zur Nutzung in Mobilfunknetzen, mit einer Anzeigeeinrichtung (2) zur optischen Wiedergabe von Informationen und wenigstens einer Eingabeeinrichtung (3', 3", 3"') zur Erfassung von Informationen, wobei seitens der Anzeigeeinrichtung (2) Kommunikationsinformationen und in Zusammenhang mit den Kommunikationsinformationen zur Verfügung stehende Bedienmöglichkeiten für eine durch Betätigung der Eingabeeinrichtung (3"') erfolgende weitergehende Nutzung der Kommunikationsinformationen wiedergebbar sind, die zur weitergehenden Nutzung der Kommunikationsinformationen zur Verfügung stehenden Bedienmöglichkeiten gewichtet werden, und die Eingabeeinrichtung (3"') wenigstens eine Taste (4, 5, 6) aufweist, welche durch Betätigung die wenigstens eine weitergehende Nutzung der Kommunikationsinformationen ermöglicht,
**dadurch gekennzeichnet,**
**dass** die zur weitergehenden Nutzung der Kommunikationsinformationen zur Verfügung stehenden Bedienmöglichkeiten entsprechend der Gewichtung der wenigstens einen die entsprechende Nutzung der Kommunikationsinformationen durch Betätigung ermöglichenden Taste (4, 5, 6) der Eingabeeinrichtung (3"') zugeordnet und seitens der Anzeigeeinrichtung (2) wiedergegeben werden, wobei die Wiedergabe in einer mit der wenigstens einen Taste (4, 5, 6) der Eingabeeinrichtung (3'") korrespondierenden Form erfolgt.

15. Endgerät (1) nach Anspruch 14, **dadurch gekennzeichnet, dass** die Wiedergabe der Bedienmöglichkeiten zur weitergehenden Nutzung der Kommunikationsinformationen seitens der Anzeigeeinrichtung (2) mit der wenigstens einen eine entsprechende weitergehende Nutzung der Kommunikationsinformationen durch Betätigung ermöglichenden Taste (4, 5, 6) der Eingabeeinrichtung (3"') hinsichtlich der Farbe, der Form und/oder der Position der Taste (4, 5, 6) seitens des Endgerätes (1) und/oder der Eingabeeinrichtung (3"') des Endgerätes (1) korrespondiert.

16. Endgerät (1) nach Anspruch 14 oder Anspruch 15, **dadurch gekennzeichnet, dass** die Farbe der wenigstens einen Taste (4, 5, 6) der Eingabeeinrichtung (3"') veränderbar ist.

17. Endgerät (1) nach einem der Ansprüche 14 bis 16, **dadurch gekennzeichnet, dass** die Gewichtung nutzerindividuell einstellbar ist.

18. Endgerät (1) nach einem der Ansprüche 14 bis 17, **dadurch gekennzeichnet, dass** die wenigstens eine eine weitergehende Nutzung der Kommunikationsinformationen durch Betätigung ermöglichende Taste (4, 5, 6) der Eingabeeinrichtung (3"') von einer zumindest teilweise berührungssensitiven Anzeigeeinrichtung ausgebildet ist.

19. Endgerät (1) nach Anspruch 18, **dadurch gekennzeichnet, dass** die berührungssensitive Anzeigeeinrichtung zumindest teilweise Bestandteil der Anzeigeeinrichtung (2) zur optischen Wiedergabe von Informationen ist.

20. Endgerät (1) nach einem der Ansprüche 14 bis 19, **dadurch gekennzeichnet, dass** die wenigstens eine eine weitergehende Nutzung der Kommunikationsinformationen durch Betätigung ermöglichende Taste (4, 5, 6) der Eingabeeinrichtung (3"') von weiteren zur Erfassung von Informationen durch Betätigung nutzbaren Tasten der Eingabeeinrichtung (3', 3") derart beabstandet angeordnet ist, dass sich zwischen der wenigstens einen eine weitergehende Nutzung der Kommunikationsinformationen durch Betätigung ermöglichenden Taste (4, 5, 6) der Eingabeeinrichtung (3"') und weiteren zur Erfassung von Informationen durch Betätigung nutzbaren Tasten der Eingabeeinrichtung (3', 3") die Anzeigeeinrichtung (2) zur optischen Wiedergabe von Informationen befindet.

21. Endgerät (1) nach Anspruch 20, **dadurch gekennzeichnet, dass** sich die wenigstens eine eine weitergehende Nutzung der Kommunikationsinformationen durch Betätigung ermöglichende Taste (4, 5, 6) der Eingabeeinrichtung (3"') in einem Bereich oberhalb der Anzeigeeinrichtung (2) zur optischen Wiedergabe von Informationen und die weiteren zur Erfassung von Informationen durch Betätigung nutzbaren Tasten der Eingabeeinrichtung (3', 3") in einem Bereich unterhalb der Anzeigeeinrichtung (2) zur optischen Wiedergabe von Informationen befinden.

22. Endgerät (1) nach einem der Ansprüche 14 bis 21, **dadurch gekennzeichnet, dass** die wenigstens eine eine weitergehende Nutzung der Kommunikationsinformationen durch Betätigung ermöglichende Taste (4, 5, 6) der Eingabeeinrichtung (3"') hinsichtlich ihrer Abmessungen größer ausgebildet ist, als die einzelnen weiteren zur Erfassung von Informationen durch Betätigung nutzbaren Tasten der Eingabeeinrichtung (3', 3").

23. Endgerät (1) nach Anspruch 22, **dadurch gekennzeichnet, dass** die wenigstens eine eine weitergehende Nutzung der Kommunikationsinformationen durch Betätigung ermöglichende Taste (4, 5, 6) der Eingabeeinrichtung (3"') hinsichtlich ihrer Abmessungen viermal so groß ausgebildet ist, wie die einzelnen weiteren zur Erfassung von Informationen durch Betätigung nutzbaren Tasten der Eingabeeinrichtung (3', 3").

24. Endgerät (1) nach einem der Ansprüche 14 bis 23, **dadurch gekennzeichnet, dass** die Eingabeeinrichtung (3"') drei durch Betätigung eine weitergehende Nutzung der Kommunikationsinformationen ermöglichende Tasten (4, 5, 6) aufweist, welche nebeneinander angeordnet sind.

25. Endgerät (1) nach einem der Ansprüche 14 bis 24, **gekennzeichnet durch** eingehende und/oder abgehende Anrufe als Kommunikationsinformationen.

26. Endgerät (1) nach einem der Ansprüche 48 14 bis 25, **gekennzeichnet durch** eingehende und/oder abgehende Mitteilungen eines Nachrichtendienstes eines Telekommunikationsnetzes als Kommunikationsinformationen.

27. Endgerät (1) nach einem der Ansprüche 14 bis 26, **gekennzeichnet durch** Informationen über Kommunikationspartner des Nutzers des Endgerätes (1) als Kommunikationsinformationen.

28. Endgerät (1) nach einem der Ansprüche 14 bis 27, **dadurch gekennzeichnet, dass** aus den Kommunikationsinformationen wenigstens eine für die Gewichtung der Bedienmöglichkeiten zur weitergehenden Nutzung der Kommunikationsinformationen nutzbare Information bestimmbar ist.

29. Endgerät (1) nach Anspruch 28, **dadurch gekennzeichnet, dass** als Information aus den Kommunikationsinformationen die Anzahl eingehender und/oder abgehender Anrufe und/oder Mitteilungen eines Nachrichtendienstes eines Telekommunikationsnetzes bestimmbar ist.

30. Endgerät (1) nach Anspruch 28 oder Anspruch 29, **dadurch gekennzeichnet, dass** als Information bestimmbar ist, ob in einer Mitteilung eines Nachrichtendienstes eines Telekommunikationsnetzes als Kommunikationsinformationen wenigstens eine bestimmte Zeichenfolge enthalten ist.

31. Endgerät (1) nach Anspruch 30, **dadurch gekennzeichnet, dass** die Zeichenfolge nutzerindividuell einstellbar ist.

32. Endgerät (1) nach Anspruch 31, **dadurch gekennzeichnet, dass** als Zeichenfolge Rufnummern und/oder Schlüsselworte nutzbar sind.

33. Endgerät (1) nach einem der Ansprüche 14 bis 32, **dadurch gekennzeichnet, dass** dieses ein in Mobilfunknetzen betreibbares mobiles Endgerät (1) ist.

34. Endgerät (1) nach einem der Ansprüche 14 bis 33, **dadurch gekennzeichnet, dass** dieses zur Ausführung eines Verfahrens nach einem der Ansprüche 1 bis 13 ausgebildet ist.

## Claims

1. A method for operating terminals (1) which can be used in mobile radio networks and which respectively comprise a display device (2) for the optical reproduction of information and at least one input device (3', 3", 3"') for gathering information, wherein the display device (2) reproduces communication information and operating options which are available in connection with the communication information for a further use of the communication information which is realized by actuating the input device (3"'), the operating options available for the further use of the communication information are weighted, and the input device (3"') comprises at least one key (4, 5, 6) which enables the at least one further use of the communication information when being actuated,
**characterized in that**
the operating options available for the further use of the communication information are allocated according to the weighting to the at least one key (4, 5, 6) of the input device (3"') which enables the corresponding further use of the communication information by actuation and are reproduced by the display device (2), wherein the reproduction is realized in a form corresponding to the at least one key (4, 5, 6) of the input device (3"').

2. A method according to claim 1, **characterized in that** the operating options for the further use of the communication information are reproduced by means of the display device (2) in a form which corresponds to the at least one key (4, 5, 6) of the input device (3"') which enables a corresponding further use of the communication information by actuation with respect to the colour, the shape and/or the position of the key (4, 5, 6) on the terminal (1) and/or the input device (3"') of the terminal (1).

3. A method according to claim 1 or claim 2, **characterized in that** for displaying the allocation of the at least one key (4, 5, 6) of the input device (3"') which enables a corresponding further use of the communication information by actuation, the colour of the key (4, 5, 6) of the input device (3"') which enables a corresponding further use of the communication information by actuation will be changed.

4. A method according to one of the claims 1 through 3, **characterized in that** the weighting of the operating options for the further use of the communication information will be set in a user individual manner.

5. A method according to one of the claims 1 through 4, **characterized in that** incoming and/or outgoing calls are reproduced as communication information by means of the display device (2).

6. A method according to one of the claims 1 through 4, **characterized in that** incoming and/or outgoing messages of a message service of a telecommunication network are reproduced as communication information by means of the display device (2).

7. A method according to one of the claims 1 through 6, **characterized in that** information about communication partners of the user of the respective terminal (1) are reproduced as communication information by means of the display device (2).

8. A method according to one of the claims 1 through 7, **characterized in that** at least one information item will be determined from the communication information and be used for the weighting of the operating options for the further use of the communication information.

9. A method according to claim 8, **characterized in that** the number of incoming and/or outgoing calls and/or messages of a message service of a telecommunication network will be determined as information item from the communication information.

10. A method according to claim 8 or claim 9, **characterized in that** it is determined as information item, whether at least one definite character string is contained as communication information in a message of a message service of a telecommunication network.

11. A method according to claim 10, **characterized in that** the character string is set in a user individual manner.

12. A method according to claim 10 or claim 11, **characterized in that** call numbers and/or key words are used as character string.

13. A method according to one of the claims 1 through 12, **characterized in that** this one can be transmitted as application program to a terminal and be carried out by means of the terminal.

14. A terminal (1) for the use in mobile radio networks, comprising a display device (2) for the optical reproduction of information and at least one input device (3', 3", 3'") for gathering information, wherein the display device (2) can reproduce communication information and operating options which are available in connection with the communication information for a further use of the communication information which is realized by actuating the input device (3"'), the operating options available for the further use of the communication information are weighted, and the input device (3"') comprises at least one key (4, 5, 6) which enables the at least one further use of the communication information when being actuated,
**characterized in that**
the operating options available for the further use of the communication information are allocated according to the weighting to the at least one key (4, 5, 6) of the input device (3"') which enables the corresponding further use of the communication information by actuation and are reproduced by the display device (2), wherein the reproduction is realized in a form corresponding to the at least one key (4, 5, 6) of the input device (3"').

15. A terminal (1) according to claim 14, **characterized in that** the reproduction of the operating options for the further use of the communication information by means of the display device (2) corresponds to the at least one key (4, 5, 6) of the input device (3"') which enables a corresponding further use of the communication information by actuation with respect to the colour, the shape and/or the position of the key (4, 5, 6) on the terminal (1) and/or the input device (3"') of the terminal (1).

16. A terminal (1) according to claim 14 or claim 15, **characterized in that** the colour of the at least one key (4, 5, 6) of the input device (3"') can be changed.

17. A terminal (1) according to one of the claims 14 through 16, **characterized in that** the weighting can be set in a user individual manner.

18. A terminal (1) according to one of the claims 14 through 17, **characterized in that** the at least one key (4, 5, 6) of the input device (3"') which enables a further use of the communication information by actuation is formed by an at least partially contact sensitive display device.

19. A terminal (1) according to claim 18, **characterized in that** the contact sensitive display device is at least partially part of the display device (2) for the optical reproduction of information.

20. A terminal (1) according to one of the claims 14 through 19, **characterized in that** the at least one key (4, 5, 6) of the input device (3"') which enables a further use of the communication information by actuation is spaced with respect to other keys of the input device (3', 3") which can be used for gathering information by actuation, such that the display device (2) for the optical reproduction of information is placed between the at least one key (4, 5, 6) of the input device (3"') which enables a further use of the communication information by actuation and other keys of the input device (3', 3") which can be used for gathering information by actuation.

21. A terminal (1) according to claim 20, **characterized in that** the at least one key (4, 5, 6) of the input device (3"') which enables a further use of the communication information by actuation is located in an area above the display device (2) for the optical reproduction of information and the other keys of the input device (3', 3") which can be used for gathering information by actuation are located in an area below the display device (2) for the optical reproduction of information.

22. A terminal (1) according to one of the claims 14 through 21, **characterized in that** the at least one key (4, 5, 6) of the input device (3"') which enables a further use of the communication information by actuation comprises larger dimensions than the ones of the other individual keys of the input device (3', 3") which can be used for gathering information by actuation.

23. A terminal (1) according to claim 22, **characterized in that** the at least one key (4, 5, 6) of the input device (3"') which enables a further use of the communication information by actuation is four times as big with respect to its dimensions as the other individual keys of the input device (3', 3") which can be used for gathering information by actuation.

24. A terminal (1) according to one of the claims 14 through 23, **characterized in that** the input device (3"') comprises three keys (4, 5, 6) which enable a further use of the communication information by actuation and which are placed side by side.

25. A terminal (1) according to one of the claims 14 through 24, **characterized by** incoming and/or outgoing calls as communication information.

26. A terminal (1) according to one of the claims 14 through 25, **characterized by** incoming and/or outgoing messages if a message service of a telecommunication network as communication information.

27. A terminal (1) according to one of the claims 14 through 26, **characterized by** information about communication partners of the user of the terminal (1) as communication information.

28. A terminal (1) according to one of the claims 14 through 27, **characterized in that** at least one information item can be determined from the communication information and be used for the weighting of the operating options for the further use of the communication information.

29. A terminal (1) according to claim 28, **characterized in that** the number of incoming and/or outgoing calls and/or messages of a message service of a telecommunication network can be determined as information item from the communication information.

30. A terminal (1) according to claim 28 or claim 29, **characterized in that** it can be determined as information item, whether at least one definite character string is contained as communication information in a message of a message service of a telecommunication network.

31. A terminal (1) according to claim 30, **characterized in that** the character string can be set in a user individual manner.

32. A terminal (1) according to claim 31, **characterized in that** call numbers and/or key words can be used as character string.

33. A terminal (1) according to one of the claims 14 through 32, **characterized in that** this one is a mobile terminal (1) which can be operated in mobile radio networks.

34. A terminal (1) according to one of the claims 14 through 33, **characterized in that** this one is designed for carrying out a method according to one of the claims 1 through 13.

## Revendications

1. Procédé d'opération des terminaux (1) utilisables dans des réseaux radio mobiles qui comprennent chacun un dispositif d'affichage (2) pour la reproduction optique des informations et au moins un dispositif d'entrée (3', 3", 3"') pour la saisie des informations, dans lequel le dispositif d'affichage (2) reproduit des informations de communication et des options de commande qui sont disponibles en relation avec les informations de communication pour une utilisation supplémentaire des informations de communication laquelle se fait en actionnant le dispositif d'entrée (3"'), les options de commande disponibles pour l'utilisation supplémentaire des informations de communication sont pondérées et le dispositif d'entrée (3"') comprend au moins une touche (4, 5, 6) qui permet de réaliser l'au moins une utilisation supplémentaire des informations de communication quand on appuie sur elle,
**caractérisé en ce que**
les options de commande disponibles pour l'utilisation supplémentaire des informations de communication sont attribuées selon la pondération à l'au moins une touche (4, 5, 6) du dispositif d'entrée (3"') qui permet de réaliser l'au moins une utilisation supplémentaire des informations de communication quand on appuie sur elle et sont reproduites par le dispositif d'affichage (2), la reproduction étant réalisée sous une forme correspondant à l'au moins une touche (4, 5, 6) du dispositif d'entrée (3"').

2. Procédé selon la revendication 1, **caractérisé en ce que** les options de commande pour l'utilisation supplémentaire des informations de communication sont reproduites par moyen du dispositif d'affichage (2) sous une forme qui correspond à l'au moins une touche (4, 5, 6) du dispositif d'entrée (3"') qui permet de réaliser une utilisation supplémentaire correspondante des informations de communication quand on appuie sur elle, par rapport à la couleur, la forme et/ou la position de la touche (4, 5, 6) sur le terminal (1) et/ou sur le dispositif d'entrée (3"') du terminal (1).

3. Procédé selon la revendication 1 ou la revendication 2, **caractérisé en ce que** pour afficher l'attribution de l'au moins une touche (4, 5, 6) du dispositif d'entrée qui permet de réaliser une utilisation supplémentaire correspondante des informations de communication quand on appuie sur elle, la couleur de la touche (4, 5, 6) du dispositif d'entrée (3"') qui permet de réaliser une utilisation supplémentaire correspondante des informations de communication quand on appuie sur elle est changée.

4. Procédé selon l'une des revendications 1 à 3, **caractérisé en ce que** la pondération des options de commande pour l'utilisation supplémentaire des informations de communication est réglée individuellement selon l'utilisateur.

5. Procédé selon l'une des revendications 1 à 4, **caractérisé en ce que** des appels arrivant et/ou sortant sont reproduits en tant que informations de communication par moyen du dispositif d'affichage (2).

6. Procédé selon l'une des revendications 1 à 4, **caractérisé en ce que** des messages arrivant et/ou sortant d'un service de messages d'un réseau de télécommunication sont reproduits en tant que informations de communication par moyen du dispositif d'affichage (2).

7. Procédé selon l'une des revendications 1 à 6, **caractérisé en ce que** des informations par rapport à des partenaires de communication de l'utilisateur du terminal (1) respectif sont reproduites en tant que informations de communication par moyen du dispositif d'affichage (2).

8. Procédé selon l'une des revendications 1 à 7, **caractérisé en ce qu'**au moins une information est déterminée à partir des informations de communication et est utilisée pour la pondération des options de commande pour l'utilisation supplémentaire des informations de communication.

9. Procédé selon la revendication 8, **caractérisé en ce que** le nombre d'appels et/ou de messages arrivant et/ou sortant d'un service de messages d'un réseau de télécommunication est déterminé en tant que information à partir des informations de communication.

10. Procédé selon la revendication 8 ou la revendication 9, **caractérisé en ce qu'**on détermine en tant que information, si au moins une chaîne de caractères particulière est contenue en tant que informations de communication dans un message d'un service de messages d'un réseau de télécommunication.

11. Procédé selon la revendication 10, **caractérisé en ce que** la chaîne de caractères est réglée individuellement selon l'utilisateur.

12. Procédé selon la revendication 10 ou la revendication 11, **caractérisé en ce qu'**on utilise des numéros d'appel et/ou des mots de clé en tant que chaîne de caractères.

13. Procédé selon l'une des revendications 1 à 12, **caractérisé en ce que** celui-ci peut être transmis en tant que programme d'application à un terminal et réalisé par moyen du terminal.

14. Terminal (1) pour l'utilisation dans des réseaux radio mobiles, comprenant un dispositif d'affichage (2) pour la reproduction optique des informations et au moins un dispositif d'entrée (3', 3", 3"') pour la saisie des informations, dans lequel le dispositif d'affichage (2) peut reproduire des informations de communication et des options de commande qui sont disponibles en relation avec les informations de communication pour une utilisation supplémentaire des informations de communication laquelle se fait en actionnant le dispositif d'entrée (3"'), les options de commande disponibles pour l'utilisation supplémentaire des informations de communication sont pondérées et le dispositif d'entrée (3"') comprend au moins une touche (4, 5, 6) qui permet de réaliser l'au moins une utilisation supplémentaire des informations de communication quand on appuie sur elle,
**caractérisé en ce que**
les options de commande disponibles pour l'utilisation supplémentaire des informations de communication sont attribuées selon la pondération à l'au moins une touche (4, 5, 6) du dispositif d'entrée (3"') qui permet de réaliser l'au moins une utilisation supplémentaire des informations de communication quand on appuie sur elle et sont reproduites par le dispositif d'affichage (2), la reproduction étant réalisée sous une forme correspondant à l'au moins une touche (4, 5, 6) du dispositif d'entrée (3"').

15. Terminal (1) selon la revendication 14, **caractérisé en ce que** la reproduction des options de commande pour l'utilisation supplémentaire des informations de communication par moyen du dispositif d'affichage (2) correspond à l'au moins une touche (4, 5, 6) du dispositif d'entrée (3"') qui permet de réaliser une utilisation supplémentaire correspondante des informations de communication quand on appuie sur elle, par rapport à la couleur, la forme et/ou la position de la touche (4, 5, 6) sur le terminal (1) et/ou sur le dispositif d'entrée (3"') du terminal (1).

16. Terminal (1) selon la revendication 14 ou la revendication 15, **caractérisé en ce que** la couleur de l'au moins une touche (4, 5, 6) du dispositif d'entrée (3"') peut être changée.

17. Terminal (1) selon l'une des revendications 14 à 16, **caractérisé en ce que** la pondération peut être réglée individuellement selon l'utilisateur.

18. Terminal (1) selon l'une des revendications 14 à 17, **caractérisé en ce que** l'au moins une touche (4, 5, 6) du dispositif d'entrée (3"') qui permet de réaliser une utilisation supplémentaire des informations de communication quand on appuie sur elle est formée par un dispositif d'affichage qui est au moins partiellement sensible au contact.

19. Terminal (1) selon la revendication 18, **caractérisé en ce que** le dispositif d'affichage sensible au contact est au moins partiellement une partie du dispositif d'affichage (2) pour la reproduction optique des informations.

20. Terminal (1) selon l'une des revendications 14 à 19, **caractérisé en ce que** l'au moins une touche (4, 5, 6) du dispositif d'entrée (3"') qui permet de réaliser une utilisation supplémentaire des informations de communication quand on appuie sur elle est espacée des autres touches du dispositif d'entrée (3', 3") qui sont utilisables pour la saisie des informations quand on appuie sur elles, de sorte que le dispositif d'affichage (2) pour la reproduction optique des informations se trouve entre l'au moins une touche (4, 5, 6) du dispositif d'entrée (3"') qui permet de réaliser une utilisation supplémentaire des informations de communication quand on appuie sur elle et des autres touches du dispositif d'entrée (3', 3") qui sont utilisables pour la saisie des informations quand on appuie sur elles.

21. Terminal (1) selon la revendication 20, **caractérisé en ce que** l'au moins une touche (4, 5, 6) du dispositif d'entrée (3"') qui permet de réaliser une utilisation supplémentaire des informations de communication quand on appuie sur elle est disposée dans une zone au-dessus du dispositif d'affichage (2) pour la reproduction optique des informations et les autres touches du dispositif d'entrée (3', 3") qui sont utilisables pour la saisie des informations quand on appuie sur elles se trouvent dans une zone au-dessous du dispositif d'affichage (2) pour la reproduction optique des informations.

22. Terminal (1) selon l'une des revendications 14 à 21, **caractérisé en ce que** l'au moins une touche (4, 5, 6) du dispositif d'entrée (3"') qui permet de réaliser une utilisation supplémentaire des informations de communication quand on appuie sur elle est plus grande par rapport à ses dimensions que les autres touches individuelles du dispositif d'entrée (3', 3") qui sont utilisables pour la saisie des informations quand on appuie sur elles.

23. Terminal (1) selon la revendication 22, **caractérisé en ce que** l'au moins une touche (4, 5, 6) du dispositif d'entrée (3"') qui permet de réaliser une utilisation supplémentaire des informations de communication quand on appuie sur elle est quatre fois plus grande par rapport à ses dimensions que les autres touches individuelles du dispositif d'entrée (3', 3") qui sont utilisables pour la saisie des informations quand on appuie sur elles.

24. Terminal (1) selon l'une des revendications 14 à 23, **caractérisé en ce que** le dispositif d'entrée (3"') comprend trois touches (4, 5, 6) qui permettent de réaliser une utilisation supplémentaire des informations de communication quand on appuie sur elles et qui sont disposées l'une à côté de l'autre.

25. Terminal (1) selon l'une des revendications 14 à 24, **caractérisé par** des appels arrivant et/ou sortant en tant que informations de communication.

26. Terminal (1) selon l'une des revendications 14 à 25, **caractérisé par** des messages arrivant et/ou sortant d'un service de messages d'un réseau de télécommunication en tant que informations de communication.

27. Terminal (1) selon l'une des revendications 14 à 26, **caractérisé par** des informations sur des partenaires de communication de l'utilisateur du terminal (1) en tant que informations de communication.

28. Terminal (1) selon l'une des revendications 14 à 27, **caractérisé en ce qu'**on peut déterminer au moins une information à partir des informations de communication qui est utilisable pour la pondération des options de commande pour l'utilisation supplémentaire des informations de communication.

29. Terminal (1) selon la revendication 28, **caractérisé en ce qu'**on peut déterminer le nombre d'appels et/ou de messages arrivant et/ou sortant d'un service de messages d'un réseau de télécommunication en tant que information à partir des informations de communication.

30. Terminal (1) selon la revendication 28 ou la revendication 29, **caractérisé en ce qu'**on peut déterminer en tant que information, si au moins une chaîne de caractères particulière est contenue en tant que informations de communication dans un message d'un service de messages d'un réseau de télécommunication.

31. Terminal (1) selon la revendication 30, **caractérisé en ce qu'**on peut régler la chaîne de caractères individuellement selon l'utilisateur.

32. Terminal (1) selon la revendication 31, **caractérisé en ce qu'**on peut utiliser des numéros d'appel et/ou des mots de clé en tant que chaîne de caractères.

33. Terminal (1) selon l'une des revendications 14 à 32, **caractérisé en ce que** celui-ci est un terminal mobile (1) opérable dans des réseaux radio mobiles.

34. Terminal (1) selon l'une des revendications 14 à 33, **caractérisé en ce que** celui-ci est configuré pour réaliser un procédé selon l'une des revendications 1 à 13.
